Europäisches Patentamt

European Patent Office

Office européen des brevets

(11) Publication number: **0 067 880**
**A1**

## EUROPEAN PATENT APPLICATION

published in accordance with Art. 158(3) EPC

(21) Application number: 82900041.3

(22) Date of filing: 16.12.81

Data of the international application taken as a basis:

(86) International application number:
PCT/JP81/00382

(87) International publication number:
WO82/02436 (22.07.82 82/18)

(51) Int. Cl.³: **G 05 B 19/42**

(30) Priority: 30.12.80 JP 186744/80

(43) Date of publication of application:
29.12.82 Bulletin 82/52

(84) Designated Contracting States:
DE FR GB

(71) Applicant: Fanuc Ltd
5-1, Asahigaoka, 3-chome
Hino-shi, Tokyo 191(JP)

(72) Inventor: INABA, Hajimu
3-16, Asahigaoka 5-chome
Hino-shi Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) ROBOT CONTROL SYSTEM.

(57) In order to hold an object (for example, a work piece) at a point $P_2$ by the movable portion of a robot, a robot-control unit (RBC) composed of a micro-computer reads out the position-control data ($V_2$, $R_2$, $Z_2$, $\theta_2$) of the point $P_2$ and feeds the data to a pulse-distributing circuit (PDC). An axis-servo circuit (SVC) receives the distributed pulses and drives axis-motors (MR, MZ, M$\theta$) so as to move the robot to the point $P_2$. When signals (WDS$_1$, WDS$_2$) indicating the passing of the robot are generated from detecting sensors, the robot-control unit calculates the coordinates of the center of the work in comparison with the coordinates of the present position of the robot and feeds the obtained correction data to the pulse-distributing circuit so as to correct the action of the robot.

Fig. 8

Croydon Printing Company Ltd.

## DESCRIPTION

## ROBOT CONTROL SYSTEM

### Technical Field

The present invention relates to a robot control system, and more particularly to a robot control system in which a workpiece or the like can be gripped correctly even when it is not located at a proper position.

### Background Art:

In a playback type industiral robot, serving operations are taught by the use of a teaching box, and the taught contents (hereinbelow, termed "robot command data") are stored in a memory within a control unit, in advance. Each time a service request is received from the machine tool side, the series of robot command data are successively read out so as to repeatedly perform the service operations for the machine tool.

The robot command data consist of information on the points at which the services are to be performed, operating speeds, and service codes for instructing the controls of a hand at the points, the exchange of signals with the machine tool side, etc. In general, the teaching is carried out in the order of (1) setting a memory address at which the robot command data is to be stored. (2) positioning by jog feed (manual feed), (3) setting the positional information and speed command value of the

point, and (4) setting the robot service code. By repeating the sequence of Items (1) to (4), the series of robot motions for the machine tool are taught. Thus, the operations so proceed that the hand of the robot is moved from the current position $P_0$ to the first point $P_1$, that it is subsequently moved to the point $P_2$, where the workpiece is located, to grip the workpiece, and that is it thereafter moved toward the predetermined position $P_3$ while gripping the workpiece. The speeds of movement to the respective points $P_1$, $P_2$ and $P_3$ and the data corresponding to the positional coordinates of the respective points are stored in the data memory of the robot controller.

The hand of the industrial robot is provided at its front end with a gripper for gripping the workpiece. It grips the workpiece WK by means of the gripper, and carries the workpiece to a different position via a predetermined path specified by the teaching data. If, whenever the workpiece gripper repeats the above operations, the gripping center thereof comes to a prescribed position with respect to the workpiece, it can stably grip the workpiece. However, in such a case where a large number of workpieces are piled up by manual labor, they are not always located at correct position, and their centers are not always aligned exactly. In this case, as regards workpieces of light weight, even when the center of the workpiece and the gripping center of the gripper disagree to some extent, the workpiece is fittingly gripped by fingers because the former moves when grasped by the latter. On the other hand, as regards workpieces of heavy weight, the workpiece cannot be moved by the gripping force of the gripper. Eventually, the gripper cannot grip the workpiece perfectly and might drop it. When positioning chuck faces, etc. of which a high positioning accuracy is required, an error may occur in which improper machining is performed because the predetermined accuracy is not achieved.

### Disclosure of the Invention:

The present invention has for its object to provide a robot control system in which even when the position of a workpiece, for example, deviates to some extent, the workpiece can be properly gripped by compensating teaching data. Concretely, in a robot control system wherein a robot is operated in accordance with teaching data, in moving the movable part of the robot toward the object of robot motion (for example, the operation of gripping workpiece), a detecting sensor is disposed on the movable part of the robot or in the vicinity of a path along which the robot moves, the coordinate values of the actual position of the robot are confirmed on the basis of a detection signal which is delivered by the detecting

sensor upon sensing the object of the robot motion, these coordinate values and predetermined reference coordinate values taught are subjected to comparative calculations by an arithmetic unit, and items of compensation data which are expressed as the resulting differences between the actual-position coordinate values and the reference coordinate values are supplied as compensation signals for the robot motion, whereby the movable part of the robot can be reliably moved to the central position of the object of the robot motion. Moreover, in a case where similar robot motions are to be repeated, the compensation data obtained by the calculations in one motion is substituted for the teaching data in a robot controller, whereby the second and succeeding robot motions can be carried out more smoothly.

Brief Description of the Drawings

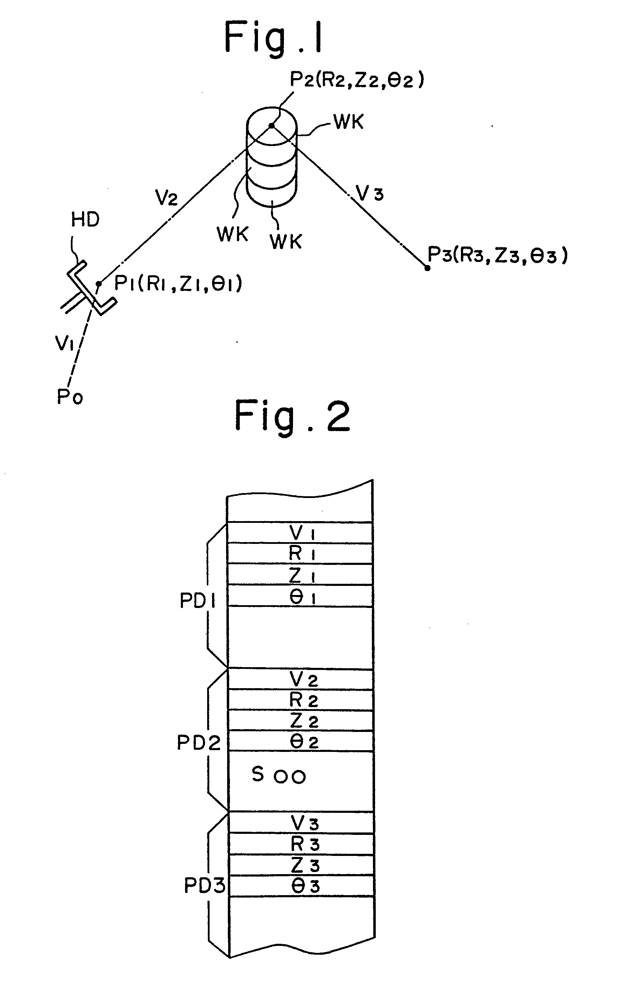

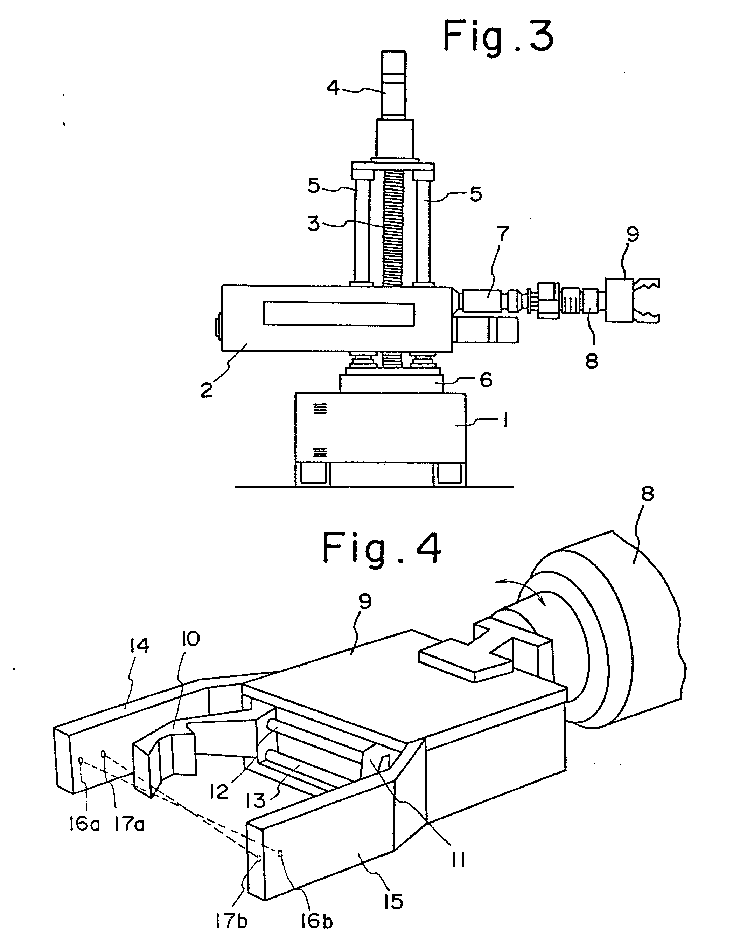

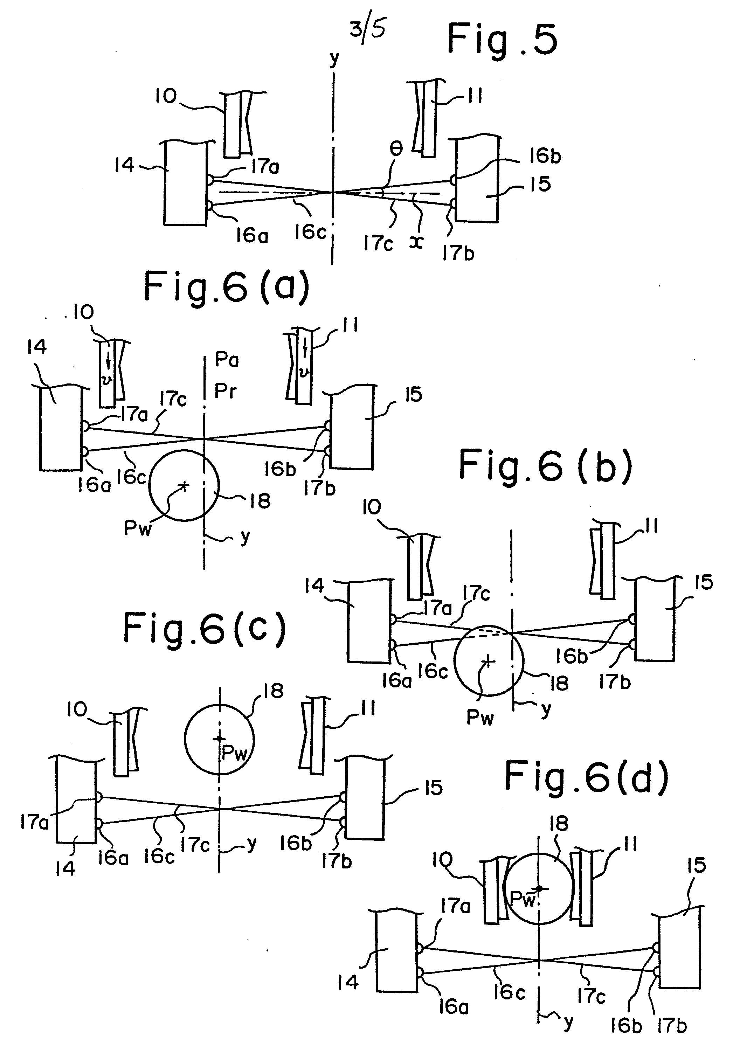

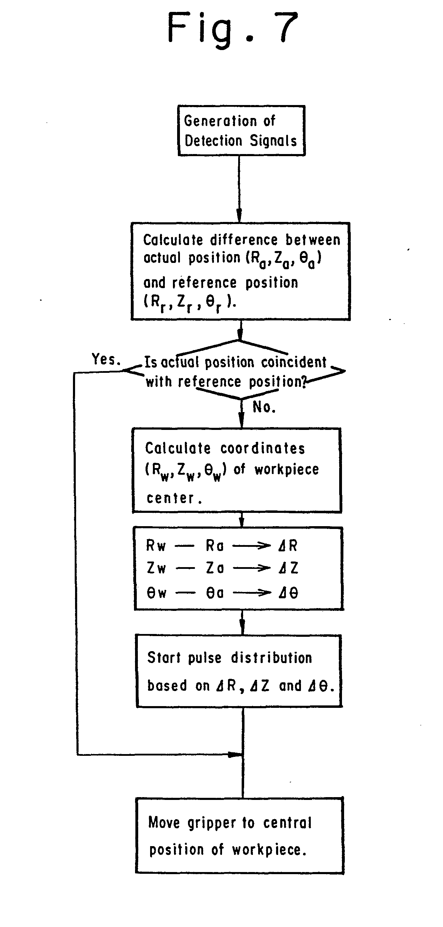

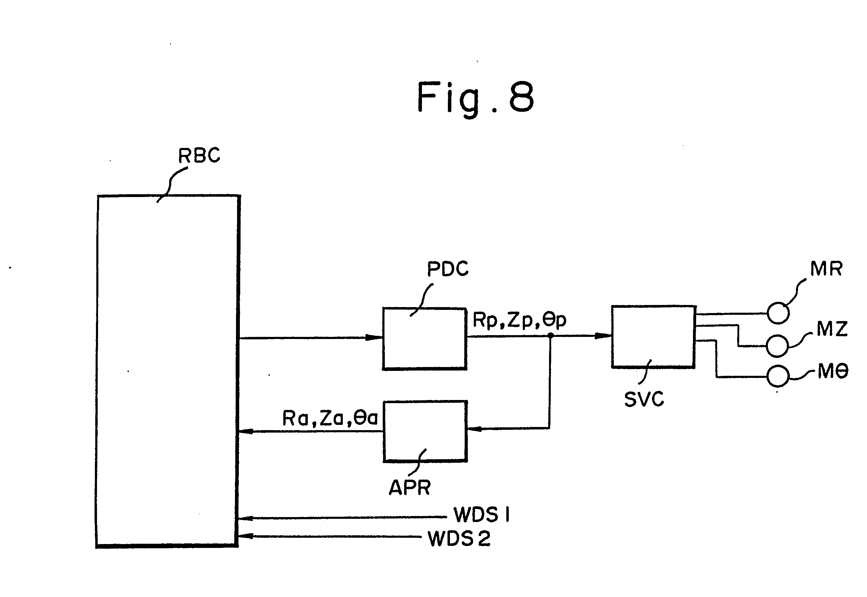

Figure 1 is an explanatory view for describing robot motion, Figure 2 is an explanatory view for describing robot command data (teaching data), Figure 3 is a front view of an industrial robot, Figure 4 is a perspective view of a workpiece gripper, Figure 5 is an explanatory view of the owrkpiece gripper, Figure 6 shows explanatory views for describing the sequence of gripping a workpiece according to the present invention, Figure 7 is a flow diagram, and Figure 8 is a block diagram for realizing the present invention.

### Best Mode for Carrying Out the Invention

In order to describe the present invention in greater detail, an embodiment of the present invention will now be described with reference to the drawings.

Figure 1 illustrates robot motion. Let it be supposed that the hand HD of a robot lying at any position $P_o$ is moved along a path of points $P_o \rightarrow P_1 \rightarrow P_2 \rightarrow P_3$ and grips a workpiece WK at the point $P_2$ in accordance with robot command data. Then, the teaching data becomes as indicated in Figure 2 in which $(R_i, Z_i, \theta_i)$ denote the coordinates of the respective points $P_i$ ($i = 1, 2, 3$), $V_i$ denotes the speed of the movement from $P_{i-1}$ to $P_i$, and Soo denotes a service code for gripping the workpiece. The teaching data is composed of point data PD1, PD2, PD3 ... at the respective points $P_1$, $P_2$, $P_3$ ..., and is stored in a data memory within a robot controller. Using the robot controller of such type, the present invention provides a robot control system in which, even when the workpiece or the like can be gripped precisely even when it is not located at a proper position.

Figure 3 is a front view showing an industrial robot to which the robot control system according to the present invention is applied. Preferring to the figure, numeral 1 designates a base, numeral 2 a robot body, numeral 3 a·

threaded rod for moving the robot body 2 in the vertical direction, numeral 4 a motor for rotating the threaded rod 3, numeral 5 each guide bar for guiding the vertical movement of the robot body 2, numeral 6 a turntable for rotating the robot body 2, and numeral 7 an arm which extends and shortens in the longitudinal direction thereof. Numeral 8 designates a wrist mechanism, and numeral 9 a workpiece gripper. As clearly shown in Figure 4, the workpiece gripper 9 is provided at its front end with two fingers 10 and 11, which are guided by two guide rods 12 and 13 to come closer to or further away from each other, thereby to grip or release a workpiece. In addition, outer frames 14 and 15 are respectively disposed outside the fingers 10 and 11. Two light emitting elements 16a and 17a are disposed inside the front end of the outer frame 14, while two light receiving elements 16b and 17b are disposed inside the front end of the outer frame 15. The elements 16a, 16b; 17a, 17b constitute a workpiece detecting sensor. The light emitting elements 16a and 17a are provided with lens mechanisms. Light emitted from the light emitting element 16a is condensed by the lens mechanism into a fine beam which reaches the light receiving element 16b, while light emitted from the light emitting element 17a is condensed by the lens mechanism into a fine beam which reaches the light receiving element 17b. As illustrated in Figure 5, the light beams 16c and 17c emergent from the respective light emitting elements 16a and 17a intersect on the gripping center line $y$ of the workpiece gripper 9 in a manner to define an angle $\theta$ therebetween.

Now, a compensating sequence in which the gripper 9 properly grips a positionally deviated workpiece will be described in accordance with Figures 6 and 7.

Figure 6(a) illustrates the situation in which the gripper 9 approaches the workpiece 18 at a speed $v$ along the gripping center line $y$ as the center of the workpiece 18 and the gripping center line $y$ of the workpiece gripper 9 deviate.

When the gripper 9 has come close to the workpiece 18 on the basis of the teaching data, the light beams from the light emitting elements 16a and 17a are blocked by the workpiece 18 as illustrated in Figure 6(b). The blocking of the light beams 16c and 17c is immediately detected by the light receiving elements 16b and 17b, and detection signals are provided. When both the light beams 16c and 17c have been blocked, whether or or not the actual position $P_a$ ($R_a$, $Z_a$, $\theta_a$) of the robot coincides with a predetermined reference point $P_r$ ($R_r$, $Z_r$, $\theta_r$) is decided by the robot controller. When they are coincident, the gripper 9 is moved as it stands, without compensating the teaching data. The position of the reference point $P_r$ is the gripping center position (robot position) at the time when both the light beams from the light emitting elements 16a and 17a have been blocked by the workpiece 18 in the case where the workpiece is located at the correct position.

On the other hand, when the actual position $P_a$ and the reference point $P_r$ are not coincident (Figure 6(b)), the coordinates of the center of the workpiece are calculated.

Now, let the y-axis be the gripping center line of the workpiece 18, and the x-axis be a straight line which is perpendicular to the y-axis, which intersects the y-axis at the intersection point of the two light beams 16c and 17c and which is contained in the gripping plane of the fingers. Further, let $t$ denote the period of time from the blocking of one light beam until the blocking of the other light beam by the gripper 9 moving at the speed $v$, and let R denote the radius of the workpiece. Then, the coordinates of the center $P_w$ of the workpiece 18 become:

$$x = -\frac{v\,t}{2} \cdot \cot\left(\frac{\theta}{2}\right) \qquad (1)$$

$$y = \frac{v\,t}{2} - \frac{R}{\cot\left(\frac{\theta}{2}\right)} \qquad (2)$$

The coordinates (x, y) of Equations (1) and (2) are transformed into the cylindrical coordinate system, whereupon the coordinates $(R_w, Z_w, \theta_w)$ of the workpiece center $P_w$ are evaluated.

Subsequently, the incremental values $\Delta R$, $\Delta Z$ and $\Delta \theta$ between the actual position $P_a (R_a, Z_a, \theta_z)$ of the robot and the central position $P_w (R_w, Z_w, \theta_w)$ of the workpiece are calculated, and they are set in a pulse distributor so as to distribute pulses. Thus, the gripping center (the robot position) is brought into position at the workpiece center $P_w$ (Figure 6(c)).

When the gripping center and the workpiece center have coincided, the fingers 10 and 11 are shut to grip the workpiece 18 (Figure 6(d)).

When the workpiece 18 has been gripped as described above, the next item of teaching data is read out, and the gripper is moved to a predetermined command point.

In a case where a plurality of workpieces 18 are stacked, calculating the workpiece center each time is dispensed with in such a manner that, when the workpiece center coordinates have been calculated, they are substituted for the teaching data.

Figure 8 is a block diagram for performing the present invention. Referring to the figure, RBC designates a robot controller constructed of a microcomputer, which includes a data memory for storing the robot command data (the teaching data), a memory for a control program that controls the processing described before, a processor, etc. PDC indicates a known pulse distribution circuit, APR an actual position register which counts up/down the distributed pulses $R_p$, $Z_p$ and $\theta_p$ of the respective axes in accordance with the signs thereof and then stores the actual position of the robot, namely, the actual position ($R_a$, $Z_a$, $\theta_a$) of the gripping center, SVC servo circuitry for the respective axes, and MR, MZ and M$\theta$ driving motors for the R-, Z- and $\theta$-axes. $WDS_1$ and $WDS_2$ denote the workpiece detection signals which are generated by the workpiece detecting sensor mounted on the movable part of the robot.

Now, in case of moving the gripper from the point $P_1$ to the point $P_2$ shown in Figure 1, the robot controller RBC reads out the position control data $V_2$, $R_2$, $Z_2$ and $\theta_2$ contained in the point data PD2 (Figure 2) from the data memory and delivers them to the pulse distribution circuit PDC. When the pulse distribution has thus been executed to generate the distributed pulses $R_p$, $Z_p$ and $\theta_p$, the motors MR, MZ and M$\theta$ of the respective axes rotate, and the gripper moves toward the point $P_2$ (the workpiece). Simultaneously therewith, the distributed pulses $R_p$, $Z_p$ and $\theta_p$ are counted reversibly by the actual position register APR in accordance with the moving direction. When the gripper continues to move toward the workpiece, both the light beams 16c and 17c (Figure 5) are blocked by the workpiece, and the workpiece detection signals $WDS_1$ and $WDS_2$ are generated. Upon the generation of the workpiece detection signals $WDS_1$ and $WDS_2$, the robot controller RBC is interrupted and executes compensation processing in accordance with a flow diagram shown in Figure 7. The incremental values $\Delta R$, $\Delta Z$ and $\Delta \theta$ are delivered to the pulse distribution circuit PDC anew on the basis of the compensation processing, with the result that the gripper has its movement compensated to be positioned at the workpiece center.

While the present invention has been described above in detail in connection with the embodiments, it is not restricted to these embodiments. For example, the detecting sensor may be one of another type. Moreover, the detecting sensor can be installed, not only on the movable part such as the arm, wrist or hand, but also in the vicinity of the path along which the robot moves.

Industrial Applicability

As set forth above, according to the present invention, even when, in a case where a playback type industrial robot performs repeated services for a machine tool, the position of the object to be services (for example, a workpiece) involves a deviation relative to a position previously taught in a controller for the robot, the central position of a robot hand can be reliably brought into coincidence with the central position of the workpiece by compensating for the deviation. Therefore, proper robot motions, i.e., operations of gripping the workpiece, chucking the workpiece, etc. are permitted. As a result, manual services for a large number of machine tools can be substituted by a robot or robots, and labor saving and job rationalization to cope with a rise in personnel expenses can be effected.

What is claimed is:

(1)  In a robot control system wherein a robot is operated in accordance with teaching data, a robot control system characterized in that a detecting sensor is disposed on a moving part of the robot or in the vicinity of a path along which the robot moves, that on the basis of a detection signal  generated by said detecting sensor and indicating passage of the robot, actual-position coordinate values of the robot at the time of the passage are compared with predetermined reference coordinate values so as to obtain compensating data for the teaching data, and that the robot operation is compensated on the basis of said compensating data.

(2)  A robot control system as defined in Claim 1, characterized in that the teaching data is partly substitued by said compensating data.

(3)  A robot control system as defined in Claim 1, characterized in that said detecting sensor includes a light emitting element, and a light receiving element which receives a light beam of said light emitting element.

# Fig .1

$P_2(R_2, Z_2, \theta_2)$

WK

$V_2$    $V_3$

HD

WK   WK

$P_3(R_3, Z_3, \theta_3)$

$P_1(R_1, Z_1, \theta_1)$

$V_1$

$P_0$

# Fig .2

| PD1 | $V_1$ |
| | $R_1$ |
| | $Z_1$ |
| | $\theta_1$ |

| PD2 | $V_2$ |
| | $R_2$ |
| | $Z_2$ |
| | $\theta_2$ |
| | $S_{00}$ |

| PD3 | $V_3$ |
| | $R_3$ |
| | $Z_3$ |
| | $\theta_3$ |

# Fig.3

4

5    5

3

7    9

8

2

6

1

# Fig.4

8

9

14  10

12  13

16a 17a

11

17b 16b  15

Fig.5

Fig.6 (a)

Fig.6 (b)

Fig.6 (c)

Fig.6 (d)

0067880

# Fig. 7

```
┌─────────────────────┐
│ Generation of       │
│ Detection Signals   │
└─────────────────────┘
          │
          ▼
┌─────────────────────────────┐
│ Calculate difference between│
│ actual position $(R_a, Z_a, \Theta_a)$ │
│ and reference position      │
│ $(R_r, Z_r, \Theta_r)$.     │
└─────────────────────────────┘
          │
          ▼
     Is actual position coincident     Yes.
     with reference position?
          │
          │ No.
          ▼
┌─────────────────────────────┐
│ Calculate coordinates       │
│ $(R_w, Z_w, \Theta_w)$ of workpiece │
│ center.                     │
└─────────────────────────────┘
          │
          ▼
┌─────────────────────────────┐
│ Rw — Ra ⟶ $\Delta R$        │
│ Zw — Za ⟶ $\Delta Z$        │
│ $\Theta$w — $\Theta$a ⟶ $\Delta\Theta$ │
└─────────────────────────────┘
          │
          ▼
┌─────────────────────────────┐
│ Start pulse distribution    │
│ based on $\Delta R, \Delta Z$ and $\Delta\Theta$. │
└─────────────────────────────┘
          │
          ▼
┌─────────────────────────────┐
│ Move gripper to central     │
│ position of workpiece.      │
└─────────────────────────────┘
```

# Fig. 8

# INTERNATIONAL SEARCH REPORT    0067880

International Application No PCT/JP81/00382

**I. CLASSIFICATION OF SUBJECT MATTER** (if several classification symbols apply, indicate all) 3

According to International Patent Classification (IPC) or to both National Classification and IPC

Int. Cl.$^3$    G05B 19/42

**II. FIELDS SEARCHED**

| Minimum Documentation Searched 4 | |
|---|---|
| Classification System | Classification Symbols |
| Int. Cl.$^3$ | G05B 19/00, B25J 9/00, B25J 13/00 |

Documentation Searched other than Minimum Documentation
to the Extent that such Documents are Included in the Fields Searched 5

| | |
|---|---|
| Jitsuyo Shinan Koho | 1926 – 1981 |
| Kokai Jitsuyo Shinan Koho | 1971 – 1981 |

**III. DOCUMENTS CONSIDERED TO BE RELEVANT 14**

| Category * | Citation of Document, 16 with indication, where appropriate, of the relevant passages 17 | Relevant to Claim No. 18 |
|---|---|---|
| X | JP,A, 52-62860 (Toyota Central Research and Development Laboratories, Inc.) 24, May, 1977 (24.05.77) Page 7, upper left column, line 16 to page 8, upper right column, line 17 | 1 |
| A | JP,A, 52-62860 (Toyota Central Research and Development Laboratories, Inc.) 24, May, 1977 (24.05.77) Page 7, upper left column, line 16 to page 8, upper right column, line 17 | 2, 3 |
| A | JP,A, 54-55959 (NACHI-Fujikoshi Corp. et al.) 4, May, 1979 (04.05.79) Page 3, upper right column, line 11 to page 3, lower left column, line 12 | 2, 3 |
| A | JP,A, 54-25059 (Toshiba Corporation) 24, February, 1979 (24.02.79) Page 6, upper right column, line 2 to page 6, lower left column, line 12 | 2, 3 |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search 2 | Date of Mailing of this International Search Report 2 |
|---|---|
| January 5, 1982 (05.01.82) | January 18, 1982 (18.01.82) |
| International Searching Authority 1 | Signature of Authorized Officer 20 |
| Japanese Patent Office | |

## FURTHER INFORMATION CONTINUED FROM THE SECOND SHEET

"X"  document of particular relevance; the claimed invention cannot be considered novel or cannot be considered to involve an inventive step

"A"  document defining the general state of the art which is not considered to be of particular relevance

---

### V. ☐ OBSERVATIONS WHERE CERTAIN CLAIMS WERE FOUND UNSEARCHABLE [10]

This international search report has not been established in respect of certain claims under Article 17(2) (a) for the following reasons:

1. ☐ Claim numbers............, because they relate to subject matter [12] not required to be searched by this Authority, namely:

2. ☐ Claim numbers............, because they relate to parts of the international application that do not comply with the prescribed requirements to such an extent that no meaningful international search can be carried out [13], specifically:

---

### VI. ☐ OBSERVATIONS WHERE UNITY OF INVENTION IS LACKING [11]

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

**Remark on Protest**

☐ The additional search fees were accompanied by applicant's protest.

☐ No protest accompanies the payment of additional search fees.

Form PCT/ISA/210 (supplemental sheet (2)) (October 1977)